(19) Europäisches Patentamt
European Patent Office
Office européen des brevets

(11) Veröffentlichungsnummer : **0 247 475 B1**

(12) # EUROPÄISCHE PATENTSCHRIFT

(45) Veröffentlichungstag der Patentschrift : **18.12.91 Patentblatt 91/51**

(51) Int. Cl.$^5$ : **C08K 5/3417**, C08L 77/00

(21) Anmeldenummer : **87107152.8**

(22) Anmeldetag : **18.05.87**

(54) **Flammfeste Polyamide.**

(30) Priorität : **27.05.86 DE 3617731**

(43) Veröffentlichungstag der Anmeldung : **02.12.87 Patentblatt 87/49**

(45) Bekanntmachung des Hinweises auf die Patenterteilung : **18.12.91 Patentblatt 91/51**

(84) Benannte Vertragsstaaten : **CH DE FR GB IT LI NL**

(56) Entgegenhaltungen : **PATENT ABSTRACTS OF JAPAN, Band 6, Nr. 257 (C-140)[1135], 16. Dezember 1982; & JP-A-57 149 352 (UBE KOSAN K.K.) 14-09-1982**

(73) Patentinhaber : **BAYER AG**
**W-5090 Leverkusen 1 Bayerwerk (DE)**

(72) Erfinder : **Joswig, Thomas, Dr.**
**Scheiblerstrasse 81**
**W-4150 Krefeld (DE)**
Erfinder : **Idel, Karsten, Dr.**
**Am Schwarzkamp 38**
**W-4150 Krefeld (DE)**
Erfinder : **Müller, Friedemann, Dr.**
**Am Steinacker 5**
**W-4040 Neuss 21 (DE)**
Erfinder : **Füllmann, Heinz-Josef, Dr.**
**Am Schneeberg 31**
**W-5653 Leichlingen 2 (DE)**

**EP 0 247 475 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

**Beschreibung**

Gegenstand der Erfindung ist die Verwendung von nicht halogenierten, cyclischen Imidverbindungen zur Herstellung von flammfesten Polyamidmassen.

Es gibt verschiedene Möglichkeiten, Polyamide flammfest auszurüsten, so z. B. durch Zugabe von rotem Phosphor, insbesondere zu glasfaserverstärkten Polyamiden, durch Zugabe einer Kombination von anorganischen Metallverbindungen wie z. B. ZnO und organischen Halogenverbindungen wie z. B. halogenierten Diels-Alder-Addukten, oder durch Zugabe von Melamin oder Melaminderivaten.

Dabei gewinnen flammfest ausgerüstete, halogenfreie Polyamidformmassen, die auch eine helle Farbeinstellung möglich machen, insbesondere für den Elektrosektor immer mehr an Bedeutung.

Für diesen Bereich kommt daher nur eine Flammfestausrüstung mit Melamin oder Melaminderivaten in Frage. Nachteilig wirkt sich bei diesen flammfest eingestellten Polyamiden die Migration des Flammschutzmittels aus, die verstärkt in einer Atmosphäre mit hohem Feuchtigkeitsgehalt auftritt. Dies kann bei Elektrospritzgußteilen zur Verschmierung der Kontaktstellen führen. Außerdem wird keine Verbesserung des Sauerstoffindex bei dieser Flammfestausrüstung der Polyamide bewirkt.

Es wurde nun überraschenderweise gefunden, daß Polyamidformmassen, die mit nicht halogenierten, cyclischen, aromatischen Imidverbindungen flammfest ausgerüstet werden, diese Nachteile nicht aufweisen.

In der JP 57-149352 werden Zusätze von Pyromellitbisimiden beschrieben, die bei Bestrahlung (Licht- oder Partikelbestrahlung) schnell - in Abhängigkeit von der Bestrahlungeine grüne Farbe entwickeln weshalb derartige Polyamidmischungen als Aufzeichnungsmaterialien oder Dosimeter benutzt werden.

Gegenstand der Erfindung ist daher die Verwendung von 2 - 20 Gew.-%, vorzugsweise 3 -14 Gew.-%, bezogen auf Polyamid, wenigstens einer nicht halogenierten, cyclischen, aromatischen Imidverbindung als Zusatz von Polyamiden zur Herstellung von flammfesten Polyamidmassen.

Die Imidverbindungen sind monomolekular und entsprechen Verbindungen der allgemeinen Formel I-III:

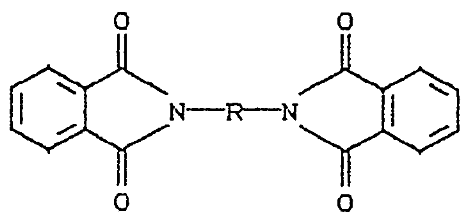

(I)

wobei

R für eine Einfachbindung, einen $C_1$-$C_{12}$-, vorzugsweise $C_2$-$C_6$-Alkylen, einen $C_6$-$C_{14}$ -, vorzugsweise $C_6$-$C_{12}$- Mono- oder Bis-Arylen, oder einen $C_7$-$C_{24}$ -, vorzugsweise $C_8$-$C_{16}$-Alkylarylen-rest oder einen Rest

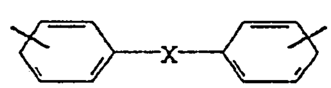

mit X = S, O, SO, $SO_2$, CO und $CH_2$
steht,
und den allgemeinen Formeln II und III,

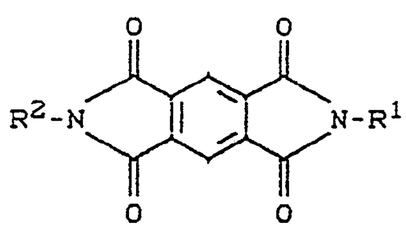

(II)

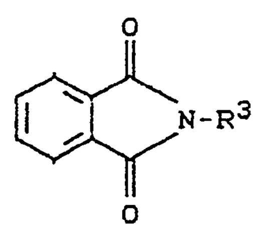

(III)

wobei $R^1$, $R^2$ und $R^3$, gleich oder verschieden, für einen $C_1$-$C_{12}$- vorzugsweise $C_2$-$C_7$-Alkyl, $C_6$-$C_{14}$ -, vorzugsweise $C_6$-$C_{12}$-Aryl- oder einen $C_7$-$C_{14}$-, vorzugsweise $C_7$-$C_{10}$-Alkylarylrest stehen, wobei die reste $R^1$-$R^3$ gege-

benenfalls noch mit OH-Gruppen substituiert sein können.

Vorzugsweise werden die Mono- oder Bisphthalsäureimide oder Pyromellitsäurebisimide von Methylamin, Benzylamin, Anilin, 2-Aminoethanol, Phenylendiamin, Ethylendiamin, 4,4'-Diaminodiphenylmethan, m-Xylylendiamin, p-Xylylendiamin oder 4,6-Dimethyl-m-xylylendiamin eingesetzt.

Für die Herstellung der erfindungsgemäßen Formmassen werden Polyamide verwendet, die nach bekannten Polykondensationsverfahren, ausgehend von Diaminen und Dicarbonsäuren und/oder Lactamen mit wenigstens 5 Ringgliedern oder entsprechender ω-Aminosäuren hergestellt werden. Als Ausgangsprodukte kommen aliphatische und aromatische Dicarbonsäuren wie Adipinsäure, 2,2,4- und 2,4,4-Trimethyladipinsäure, Azelainsäure, Sebazinsäure, Decandicarbonsäure, Dodecandicarbonsäure, Isophthalsäure, Terephthalsäure, aliphatische und aromatische Diamine wie Hexamethylendiamin, 2,2,4- und 2,4,4-Trimethylhexamethylendiamin, die isomeren Diamino-dicyclohexyl-methane, Diamino-dicyclohexyl-propane, Isophorondiamin, die isomeren Xylylendiamine, Bis-aminomethyl-cyclohexan, Aminocarbonsäuren wie ε-Aminocapronsäure, ω-Aminoundecansäure, ω-Aminolaurinsäure bzw. die entsprechenden Lactame in Betracht. Auch Copolyamide aus mehreren der genannten Monomeren können eingesetzt werden.

Bevorzugte Polyamide sind Polyamid-6 und Polyamid 6,6.

Die Herstellung der erfindungsgemäßen Polyamidformmassen erfolgt vorzugsweise durch Mischen der Imide mit dem Polyamid in Ein- oder Doppelwellenextruder herkömmlicher Bauart bei üblichen Temperaturen. Man kann dazu die Komponenten vor der Extrusion mischen oder in das bereits geschmolzene Polyamid dosieren oder als Konzentrat Polyamide in die Polyamidschmelze eingeben.

Die brandwidrig ausgerüsteten Polyamide können die üblichen Zusätze und Hilfsmittel enthalten, beispielsweise einen oder mehrere Füll- oder Verstärkungsstoffe, insbesondere Glasfasern in Mengen von 10-60 Gew.-%, bezogen auf die gesamte Mischung. Als weitere Füll- und Verstärkungsstoffe kommen Mikroglaskugeln, Kohlefasern, Kreide, Quarz wie beispielsweise Novaculit und Silikate wie Asbest, Feldspat, Glimmer, Talkum, Wollastonit sowie Kaolin in kalzinierter und nicht kalzinierter Form in Betracht. Außerdem sind Farbstoffe und Pigmente, insbesondere Farbruße und/oder Nigrosinbasen, Stabilisatoren, Verarbeitungshilfsmittel und staubbindende Mittel zu nennen, ferner Schlagzähmodifikatoren beispielsweise Copolymerisate des Ethylens, Poly(meth)-acrylaten oder gepfropfte Polybutadiene.

Die flammfesten thermoplastischen Formmassen werden nach den bekannten Methoden durch Spritzguß oder Extrusion verarbeitet. Die flammfest ausgerüsteten Polyamid-Formkörper sind besonders für den Einsatz auf dem Elektro- und Automobilsektor geeignet und finden beispielsweise zur Herstellung von Gehäusen und Abdeckungen für technische Geräte wie Elektrohaushaltsgeräte, und für Automobilteile Verwendung.

Beispiele 1 - 16

In einem Doppelwellenextruder von Typ ZSK 32 der Firma Werner und Pfleiderer wird Polyamid 66 (relative Viskosität 3,0, gemessen an einer einprozentigen Lösung in m-Kresol bei 25°C) mit verschiedenen (Bis)Imiden (hergestellt gemäß DE-OS 33 42 414) bei einer SchmelzmasseTemperatur von 274 - 280°C und einem Durchsatz von 10 kg/h gemischt. Die Mischung wird als Borste in einem Wasserbad abgekühlt. Nach dem Granulieren und Trocknen wird die Mischung zu Prüfkörpern verarbeitet.

Die Zusammensetzung der Mischung und die Prüfergebnisse gehen aus Tabelle 1 und 2 hervor.

Im Flammfestigkeitstest nach Underwriters Laboratories Subj. 94 erreichen die Polyamide mit den Bisimiden (Beispiel 1 bis 6) bei sehr dünnen Wandstärken von 3,2 und 1,6 mm mit der Klassifizierung VO die höchste Einstufung und zeigen damit eine ausgezeichnete Flammschutzwirkung.

Weiterhin wurde als Maß für die Brandschutzwirkung der Sauerstoffindex (OI) (entsprechend ANSI/ASTM D 2863-77; Probenzündung mit Fremdflamme von unten) gemessen.

Vergleichsbeispiele I - III

Wie in Beispiele 1 - 6 beschrieben, wurde Polyamid 6,6 ohne und mit Melamin bzw. Dechloran als Flammschutzmittel getestet.

Die Ergebnisse sind ebenso in Tabelle 1 angegeben.

Tabelle 1

| Beispiele | | 1 | 2 | 3 | 4 | 5 | 6 | I | II | III |
|---|---|---|---|---|---|---|---|---|---|---|
| PA 66 | Gew.-% | 90 | 90 | 90 | 90 | 90 | 90 | 90 | 100 | 85 |
| Melamin | " | - | - | - | - | - | - | 10 | - | - |
| Dechloran | " | - | - | - | - | - | - | - | - | 5 |
| Bisphthalimid aus p-Phenylendiamin | " | 10 | - | - | - | - | - | - | - | 10 |
| Ethylendiamin | " | - | 10 | - | - | - | - | - | - | - |
| 4,4'-Diaminodiphenylmethan | " | - | - | 10 | - | - | - | - | - | - |
| m-Xylylendiamin | " | - | - | - | 10 | - | - | - | - | - |
| p-Xylylendiamin | | | | | | 10 | | | | |
| 4,6-Dimethyl-m-xylylendiamin | " | - | - | - | - | - | 10 | - | - | - |
| Sauerstoffindex | ($O_2$%) | 30 | 25 | 29 | 27 | 26 | 27 | 20 | 18 | 21 |
| Migration 1) | (hr) | 20 | 24 | 22 | 28 | 20 | 26 | 6 | nb 2) | 18 |
| Brandverhalten nach | | | | | | | | | | |
| UL Subj. 94 1,6 mm | | V0 | V0 | V0 | V0 | V0 | V0 | V2 | V2 | V2 |
| 3,2 mm | | V0 | V0 | V0 | V0 | V0 | V0 | V0 | V2 | V2 |

1) Normklima: 95% Luftfeuchtigkeit; 40° C

2) nicht beobachtet

Tabelle 2

| Beispiel | | 7 | 8 | 9 | 10 | 11 | 12 | 13 | 14 | 15 | 16 |
|---|---|---|---|---|---|---|---|---|---|---|---|
| PA 66 | Gew.-% | 95 | 95 | 95 | 90 | 95 | 90 | 95 | 90 | 95 | 90 |
| Bisphthalimid aus 4,4'-Diaminodiphenylmethan | " | 5 | - | - | - | - | - | - | - | - | - |
| m-Xylylendiamin | " | - | 5 | - | - | - | - | - | - | - | - |
| Monophthalimid aus Benzylamin | " | - | - | 5 | 10 | - | - | - | - | - | - |
| 2-Aminoethanol | " | - | - | - | - | 5 | 10 | - | - | - | - |
| Pyromellitsäurebisimide aus Benzylamin | " | - | - | - | - | - | - | 5 | 10 | - | - |
| 2-Aminoethanol | " | - | - | - | - | - | - | - | - | 5 | 10 |
| Sauerstoffindex | ($O_2$%) | 26,5 | 25,5 | 26 | 28 | 23 | 29,5 | 29 | 30 | 25 | 31 |
| Migration[1)] | (hr) | 20 | 20 | 24 | 22 | 30 | 32 | 26 | 24 | 30 | 34 |
| Brandverhalten nach | | | | | | | | | | | |
| UL Subj. 94 1,6 mm | | V2 | V2 | V0 | V0 | V2 | V0 | V0 | V0 | V2 | V0 |
| 3,2 mm | | V2 | V0 | V0 | V0 | V0 | V0 | V0 | V0 | V0 | V0 |

## Patentansprüche

1. Verwendung von 2 bis 20 Gew.-%, bezogen auf Polyamid, wenigstens einer nicht halogenierten, cyclischen, aromatischen Imidverbindung der allgemeinen Formeln I-III, wobei in der Formel I

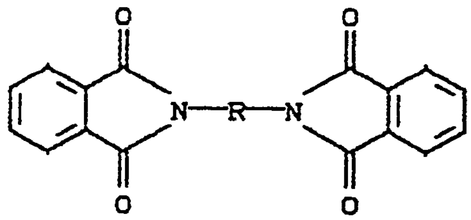,

(I)

R für eine Einfachbindung, einen $C_1$-$C_{12}$ -Alkylen, einen $C_6$-$C_{14}$ -Mono- oder Bis-Arylen-, oder einen $C_7$-$C_{24}$-Alkylarylen-Rest
oder einen Rest der Formel

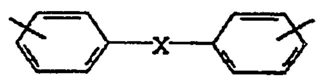

steht, in der X = S, O, SO, $SO_2$, CO oder $CH_2$ bedeutet,
und wobei in den Formeln II und III

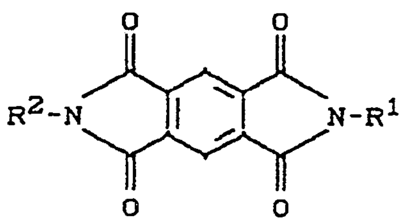

(II)

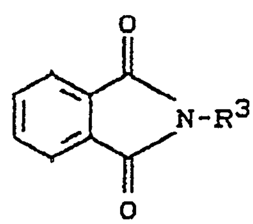

(III)

$R^1$ , $R^2$ und $R^3$, gleich oder verschieden für einen $C_1$-$C_{12}$ -Alkyl-, $C_6$-$C_{14}$- Aryl- oder einen $C_7$-$C_{14}$- Alkylarylrest stehen, wobei die Reste $R^1$-$R^3$ gegebenenfalls noch mit OH-Gruppen substituiert sein können,
zur Herstellung von flammfesten, thermoplastischen Polyamidformmassen.
Verwendung von 3 bis 14 Gew.-%, bezogen auf Polyamid, wenigstens einer nicht halogenierten, cyclischen, aromatischen Imidverbindung der allgemeinen Formeln I und III, wobei in der Formel I

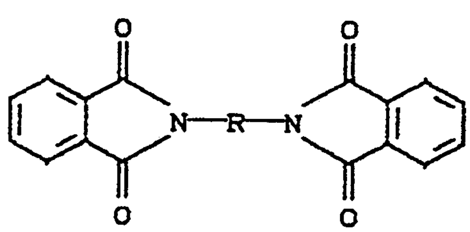,

(I)

R für einen $C_2$-$C_8$-Alkylen-, einen $C_6$-$C_{12}$-Mono-oder Bis-Arylen-, oder einen $C_8$-$C_{16}$-Alkylarylen-Rest
oder einen Rest der Formel

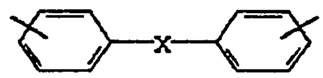

steht, in der X = S, O, SO, $SO_2$, CO oder $CH_2$ bedeutet, und wobei in der Formel III

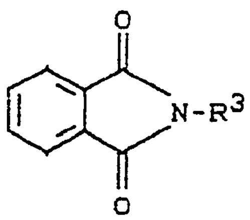

(III)

$R^3$ für einen $C_2$-$C_7$-Alkyl-, $C_6$-$C_{12}$-Aryl- oder einen $C_7$-$C_{10}$-Alkylarylrest steht, wobei der Rest $R^3$ gegebenenfalls noch mit OH-Gruppen substituiert sein kann, zur Herstellung von flammfesten, thermoplastischen Polyamidmassen.

3. Verwendung von 3 bis 14 Gew,-%, bezogen auf Polyamid, wenigstens einer nicht halogenierten, cyclischen, aromatischen Imidverbindung der allgemeinen Formel II nach Anspruch 1

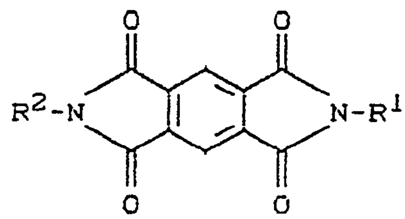

(II)

in der $R^1$ und $R^2$ gleich oder verschieden, für einen $C_2$-$C_7$-Alkyl-, $C_6$-$C_{12}$-Aryl- oder einen $C_7$-$C_{10}$-Alkylarylrest steht, wobei die Reste $R^1$-$R^2$ gegebenenfalls noch mit OH-Gruppen substituiert sein können, zur Herstellung von flammfesten, thermoplastischen Polyamidformmassen.

4, Verwendung nach Ansprüchen 1 und 2, dadurch gekennzeichnet, daß als Imid ein Bisimid aus 2 Mol Phthalsäureanhydrid und 1 Mol Phenylendiamin, Ethylendiamin, 4,4'-Diaminodiphenylmethan, m-Xylylendiamin, p-Xylylendiamin oder 4,6-Dimethyl-m-xylylendiamin oder ein Monoimid aus Phthalsäureanhydrid und 1 Mol Methylamin, Benzylamin, Anilin oder 2-Aminethanol eingesetzt werden.

5. Verwendung nach Anspruch 1 und 3, dadurch gekennzeichnet, daß als Imid ein Bisimid aus 1 Mol Pyromellitsäuredianhydrid und 2 Mol Methylamin, Benzylamin, Anilin oder 2-Aminethanol eingesetzt werden.

6. Verwendung nach Ansprüchen 1 bis 5, dadurch gekennzeichnet, daß als Polyamid Polyamid 6 oder Polyamid 66 eingesetzt wird.

## Revendications

1. Utilisation de 2 à 20% en poids, par rapport à un polyamide, d'au moins un composé imidique aromatique cyclique non halogéné de formules générales I à III dans lesquelles : dans la formule I

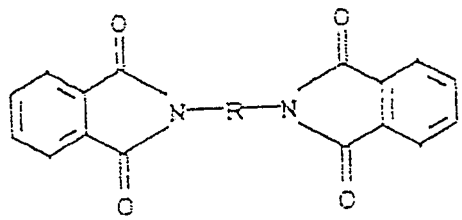

( I )

R représente une liaison simple, un reste alkylène en $C_1$ à $C_{12}$, un reste mono-arylène ou bis-arylène en $C_6$ à $C_{14}$ ou un reste alkylarylène en $C_7$ à $C_{24}$
ou un reste de formule

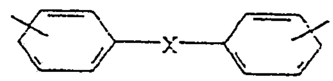

dans laquelle X représente S, O, SO, $SO_2$, CO ou $CH_2$, et dans les formules II et III

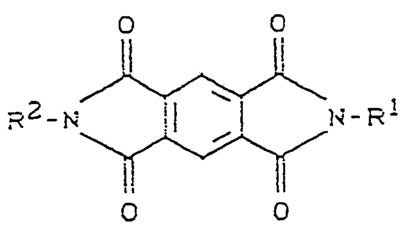

( II )

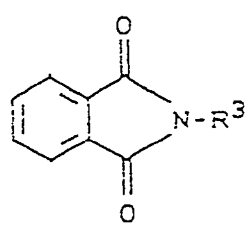

( III )

$R^1$ , $R^2$ et $R^3$, identiques ou différents, représentent un reste alkyle en $C_1$ à $C_{12}$, un reste aryle en $C_6$ à $C_{14}$ ou un reste alkylaryle en $C_7$ à $C_{14}$, les restes $R^1$ à $R^3$ pouvant encore être substitués, le cas échéant, avec des groupes OH,
pour la produciton de matières à mouler à base de polyamide thermoplastique résistant à la flamme.

2. Utilisation de 3 à 14 % en poids, par rapport au polyamide, d'au moins un composé imidique aromatique cyclique non halogéné de formules générales I et III, où dans la formue I

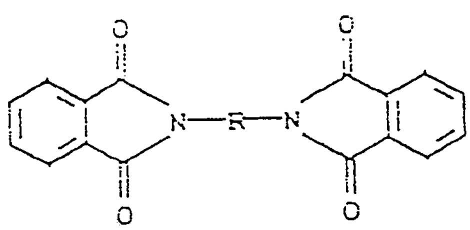

( I )

R représente un reste alkylène en $C_2$ à $C_6$, un reste mono- ou bis-arylène en $C_6$ à $C_{12}$ ou un reste alkylarylène en $C_8$ à $C_{16}$
ou un reste de formule

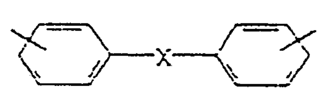

dans laquelle X représente S, O, SO, $SO_2$, CO ou $CH_2$, et dans la formule III

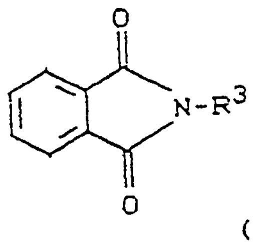

(III)

$R^3$ est un reste alkyle en $C_2$ à $C_7$, aryle en $C_6$ à $C_{12}$ ou un reste alkylaryle en $C_7$ à $C_{10}$, le reste $R^3$ pouvant encore être substitué, le cas échéant, par des groupes OH,
pour la production de compositions thermoplastiques à base de polyamide résistant à la flamme.

3. Utilisation de 3 à 14 % en poids, par rapport au polyamide, d'au moins un composé imidique aromatique cyclique non halogéné de formule générale II suivant la revendication 1

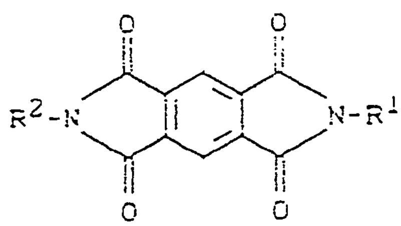

(II)

dans laquelle
$R^1$ et $R^2$, identiques ou différents, représentent un reste alkyle en $C_2$ à $C_7$, aryle en $C_6$ à $C_{12}$ ou alkylaryle en $C_7$ à $C_{10}$ , les restes $R^1$-$R^2$ pouvant encore être substitués, le cas échéant, avec des groupes OH,
pour la production de compositions moulables thermoplastiques à base de polyamide résistant à la flamme.

4. Utilisation suivant les revendications 1 et 2, caractérisée en ce qu'on utilise comme imide un bisimide dérivé de 2 moles d'anhydride d'acide phtalique et de 1 mole de phénylènediamine, d'éthylènediamine, de 4,4'-diaminodiphénylméthane, de m-xylylènediamine, de p-xylylènediamine ou de 4,6-diméthyl-m-xylylènediamine ou un mono-imide dérivé d'anhydride d'acide phtalique et de 1 mole de méthylamine, de benzylamine, d'aniline ou de 2-amino-éthanol.

5. Utilisation suivant les revendications 1 et 3, caractérisée en ce qu'on utilise comme imide un bisimide dérivé de 1 mole de dianhydride d'acide pyromellitique et de 2 moles de méthylamine, de benzylamine, d'aniline ou de 2-amino-éthanol.

6. Utilisation suivant les revendications 1 à 5, caractérisée en ce qu'on utilise comme polyamide le polyamide 6 ou le polyamide 66.

## Claims

1. The use of 2 to 20% by weight, based or polyamide, of at least one non-halogenated, cyclic aromatic imide compound corresponding to general formulae I to III below:

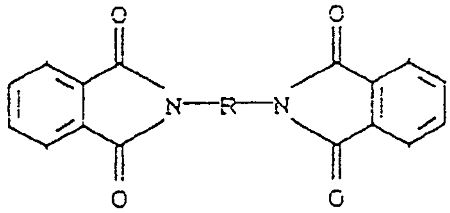,

(I)

in which

R is a single bond, a $C_{1-12}$ alkylene, a $C_{6-14}$ mono- or bisarylène or a $C_{7-24}$ alkylarylene radical or a group corresponding to the formula

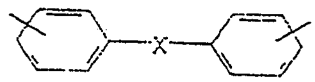

in which X = S, O, SO, $SO_2$, CO or $CH_2$;

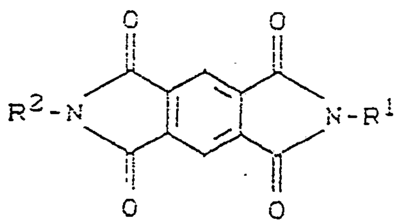

(II)

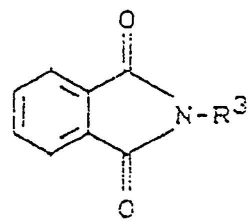

(III)

in which
$R^1$, $R^2$ and $R^3$ may be the same or different and represent a $C_{1-12}$ alkyl $C_{6-14}$ aryl or a $C_{7-14}$ alkylaryl radical;
the substituents $R^1$ to $R^3$ may optionally be substituted by OH groups,
for the production of flameproof thermoplastic polyamide moulding compounds.

2. the use of 3 to 14% by weight, based on polyamide, of at least one non-halogenated, cyclic aromatic imide compound corresponding to general formulae I and III below:

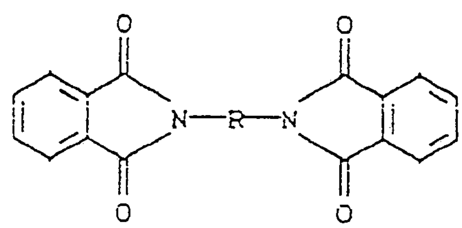

,

(I)

in which
R is a $C_{2-8}$ alkylene, a $C_{6-12}$ mono- or bis-arylene or a $C_{8-16}$ alkyarylene radical or a group corresponding to the formula

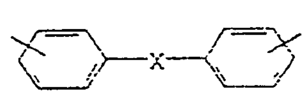

in which X = S, O, SO, $SO_2$, CO ro $CH_2$;

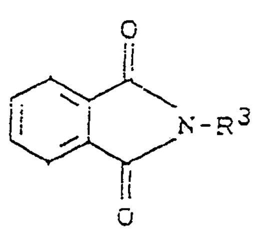

(III)

in which
$R^3$ is a $C_{2-7}$ alkyl, $C_{6-12}$ aryl or a $C_{7-10}$ alkylaryl radical and may optionally be substituted by OH groups, for the production of flameproof thermoplastic polyamide moulding compounds.

3. The use of 3 to 14% by weight, based on polyamide, of at least one non-halogenated, cyclic aromatic imide compound corresponding to general formula II in claim 1:

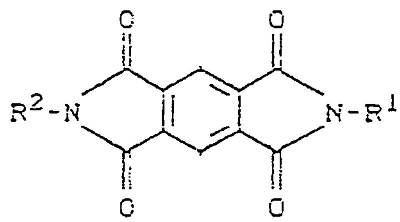

(II)

in which
$R^1$ and $R^2$ may be the same or different and represent a $C_{2-7}$ alkyl, $C_{6-12}$ aryl or a $C_{7-10}$ alkylaryl radical and may optionally be substituted by OH groups,
for the production of flameproof thermoplastic polyamide moulding compounds.

4. The use claimed in claims 1 and 2, characterized in that a bis-imide of 2 mol phthalic anhydride and 1 mol phenylenediamine, ethylenediamine, 4,4'-diaminodiphenylmethane, m-xylylenediamine, p-xylylenediamine or 4,6-dimethyl-m-xylylene diamine or a mono-imide of phthalic anhydride and 1 mol methylamine, benzylamine, aniline or 2-aminoethanol is used as the imide.

5. The use claimed in claims 1 and 3, characterized in that a bis-imide of 1 mol pyromellitic dianhydride and 2 mol methylamine, benzylamine, aniline or 2-aminoethanol is used as the imide.

6. The use claimed in claims 1 to 5, characterized in that polyamide-6 or polyamide-66 is used as the polyamide.